# EUROPEAN PATENT APPLICATION

(11) **EP 4 775 951 A1**
(43) Date of publication of application: **15.07.2026**
(21) Application number: 25225894.2
(22) Date of filing: 19.12.2025
(51) Int. Cl.: G01N 15/06, B01L 3/00, B03C 5/00, G01N 27/26

(54) **OBSERVATION APPARATUS AND OBSERVATION METHOD**

(30) Priority: 08.01.2025 JP 2025002680
(71) Applicant: SCREEN Holdings Co., Ltd., Kyoto-shi, Kyoto 602-8585 (JP)
(72) Inventor: YABU, Mitsuhiro, Kyoto-shi, Kyoto, 602-8585 (JP); KIMURA, Yuya, Kyoto-shi, Kyoto, 602-8585 (JP)
(74) Representative: Goddar, Heinz J.

(57) **Abstract**

This observation apparatus 1 observes a particle trapped by a plurality of electrodes 72 extending in a direction crossing a channel 80 formed in a transparent substrate 9, and includes an imaging unit 31, a camera moving mechanism 32 that moves an imaged area of the imaging unit 31, and a control unit 10. The control unit 10 includes an end-electrode detection unit 511 that detects an end electrode 720a positioned at an end of the channel 80, an adjacent-electrode detection unit 512 that detects an adjacent electrode 720b adjacent to the end electrode 720a, a channel wall detection unit 513 that detects a sidewall 800w of the channel 80, and an observation position adjustment unit 514 that adjusts an observation position where the particle is observed, on the basis of the positions of the end electrode 720a, the adjacent electrode 720b, and the sidewall 800w. This enables proper alignment in observation of particles trapped in the vicinity of the electrodes 72 in the substrate 9 such as a micro-channel chip.

## Description

### RELATED APPLICATIONS

This application claims the benefit of Japanese Application No. 2025-002680, filed on January 8, 2025, the disclosure of which is incorporated by reference herein.

### BACKGROUND OF THE INVENTION

### Field of the Invention

The present invention relates to an observation apparatus and an observation method that enable efficient adjustment of an observation position in observation of fine dielectric particles using a micro-channel chip.

### Description of the Background Art

An apparatus including micro channels and electrodes, called a micro-channel chip, is conventionally used for observing and separating particulate biological samples such as bacteria or cells. For example, a separation chip described in Japanese Patent Application Laid-Open No. 2020-99256 utilizes hydro-dynamic filtration (HDF) and dielectrophoresis (DEP) as a label-free and non-destructive method of separating and concentrating rare cells such as circulating tumor cells (CTC). A DEP part of the separation chip induces particles having specific electrical characteristics by dielectrophoresis, to separate and collect a desired kind of particles.

The micro-channel chips include not only the above-mentioned type that induces specific particles by electrophoresis, but also a particle-trapping micro-channel chip that traps specific particles in an electrode exposed in a channel, thereby to separate and observe the particles. Such a particle-trapping micro-channel chip is used for the purpose of checking the presence or absence of bacteria and microorganisms in some cases.

Observation apparatuses for observing fine particles, typified by the micro-channel chip, include also an apparatus having a function of automatically adjusting an observation position (a visual field and a focus), i.e., an auto-alignment function. As generally known, with the auto-alignment function, a mark is put on a container or a chip in which an observed object is stored, or a characteristic structure of the container or the chip is used as a mark, and an observation position is adjusted by reference to the mark. Then, whether auto-alignment has been properly performed can be determined depending on whether the observed object can be visually recognized with certainty.

In observation with a micro-channel chip in which channels themselves are fine, slight deviation of a chip mounting position results in great deviation of a visual field. In this connection, the auto-alignment function could considerably reduce a time period for an observation process, allowing an increase in efficiency.

However, when used for the purpose of checking the presence or absence of bacteria and microorganisms, the particle-trapping micro-channel chip can trap very few particles or, occasionally, no particles in the vicinity of an electrode. Hence, even with the auto-alignment function, whether proper alignment has been performed cannot be determined in some cases.

### SUMMARY OF THE INVENTION

The present invention has been made in view of the above-described circumstances, and it is an object of the present invention to provide technologies for performing proper alignment in observation of particles trapped in the vicinity of an electrode.

To solve the above-described problem, the first invention of the present application is directed to an observation apparatus that observes a particle trapped by a plurality of electrodes extending in a direction crossing a channel formed in a transparent substrate, and includes: a camera configured to take an image of an area including the electrodes in the substrate; a camera moving mechanism configured to move an imaged area of the camera; and a control unit configured to control the camera and the camera moving mechanism, wherein the control unit includes; an end-electrode detection unit configured to move the camera using the camera moving mechanism and detect an end electrode that is one of the electrodes that is positioned at an upstream or downstream end of the channel, on the basis of a taken image of the camera; an adjacent-electrode detection unit configured to move the camera using the camera moving mechanism and detect an adjacent electrode that is adjacent to the end electrode detected by the end-electrode detection unit, on the basis of the taken image of the camera; a channel wall detection unit configured to move the camera using the camera moving mechanism and detect a sidewall of the channel by reference to positions of the end electrode and the adjacent electrode; and an observation position adjustment unit configured to move the camera using the camera moving mechanism and adjust an observation position where the particle is observed, on the basis of the positions of the end electrode, the adjacent electrode, and the sidewall.

The second invention of the present application is directed to the observation apparatus of the first invention, wherein the end electrode of the plurality of electrodes included in the substrate has a width different from those of the other electrodes.

The third invention of the present application is directed to the observation apparatus of the first invention, wherein the control unit further includes a focus point control unit configured to align the camera to the observation position using the observation position adjustment unit and adjust a focus of the camera by reference to surfaces of the electrodes.

The fourth invention of the present application is directed to an observation method for observing a particle trapped by a plurality of electrodes extending in a direction crossing a channel formed in a transparent substrate, including: a) an end-electrode detection step of moving a camera configured to take an image of an area including the electrodes in the substrate and detecting an end electrode that is one of the electrodes that is positioned at an upstream or downstream end of the channel, on the basis of a taken image of the camera; b) an adjacent-electrode detection step of moving the camera and detecting an adjacent electrode that is adjacent to the end electrode detected in the step a); c) a channel wall detection step of moving the camera and detecting a sidewall of the channel by reference to positions of the end electrode and the adjacent electrode; and d) an observation position adjustment step of moving the camera and adjusting an observation position where the particle is observed, on the basis of the positions of the end electrode, the adjacent electrode, and the sidewall.

The first invention to the fourth invention of the present application enable proper alignment in observation of particles trapped in the vicinity of the electrodes.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view of an observation apparatus;
Fig. 2 is a control block diagram of a control unit;
Fig. 3 is a top view of a micro-channel chip;
Fig. 4 is a top view of each layer of the micro-channel chip;
Fig. 5 is a partial top view of an electrode layer of the micro-channel chip;
Fig. 6 is a partial sectional view of the micro-channel chip in which dielectric particles are trapped;
Fig. 7 is a flowchart showing a process flow of an observation process of particles under inspection;
Fig. 8 is a flowchart showing a process flow of an imaged-area adjustment step;
Fig. 9 is a flowchart showing a process flow of an end-electrode detection step;
Fig. 10 is a view showing examples of an x-direction position of an imaged area;
Fig. 11 is a flowchart showing a process flow of an adjacent-electrode detection step;
Fig. 12 is a flowchart showing a process flow of a channel wall detection step;
Fig. 13 is a view diagrammatically showing how electrodes and channel walls appear in a taken image of an imaging unit; and
Fig. 14 is a view showing examples of a y-direction position of an imaged area.

### DESCRIPTION OF THE PREFERRED EMBODIMENTS

Hereinafter, a preferred embodiment of the present invention will be described with reference to the drawings. Note that, in the following description, with respect to a state in which a micro-channel chip 9 is placed horizontally, a longitudinal direction of the micro-channel chip 9 is defined as an x direction, a transverse direction is defined as a y direction, and a vertical direction is defined as a z direction.

### <1. Observation Apparatus>

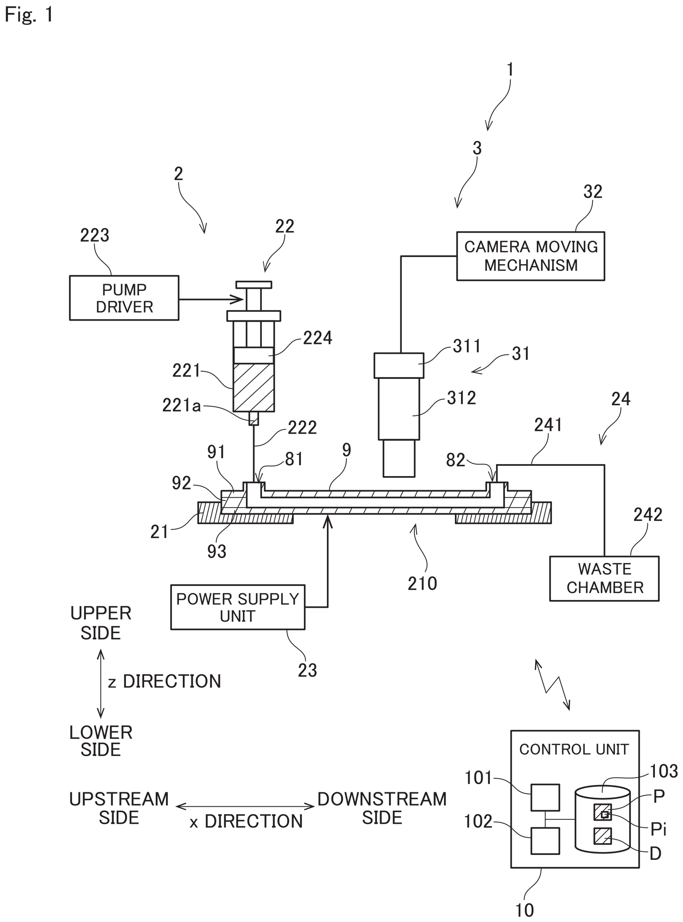

Fig. 1 is a schematic view of an observation apparatus 1 according to one embodiment. The observation apparatus 1 is an apparatus for observing a target particle in a sample solution flowing through a channel 80 in the micro-channel chip 9 serving as a substrate. The target particle is, for example, a microorganism, a cell, protein, or nucleic acid. Further, the microorganism is, for example, a bacterium, a fungus, or a virus.

As shown in Fig. 1, the observation apparatus 1 includes a dielectrophoresis device 2, an imaging device 3, and a control unit 10.

The dielectrophoresis device 2 includes a chip placement stage 21, a sample solution supply unit 22, a power supply unit 23, and a sample solution collection unit 24.

The chip placement stage 21 is a stage for horizontally holding the micro-channel chip 9. The chip placement stage 21 includes an observation window 210 vertically penetrating at a position where there is a vertical overlap with the vicinity of a second interdigital electrode unit 72 that is an area to be observed when the micro-channel chip 9 is placed thereon.

The sample solution supply unit 22 is a mechanism for supplying a sample solution into the micro-channel chip 9 placed on the chip placement stage 21. In the present embodiment, the sample solution supply unit 22 includes a syringe pump 221, a supply tube 222, and a pump driver 223. In the syringe pump 221, a sample solution is stored. The supply tube 222 has one end connected so as to communicate with a discharge port 221a of the syringe pump 221, and the supply tube 222 has the other end connected so as to communicate with a sample solution supply port 81 of the micro-channel chip 9. The pump driver 223 can drive vertically a plunger 224 of the syringe pump 221 in accordance with an instruction from the control unit 10. The pump driver 223 drives the plunger 224 in a direction in which the plunger 224 approaches the discharge port 221a, and thus a sample solution in the syringe pump 221 is supplied to the micro-channel chip 9 via the discharge port 221a and the supply tube 222.

The power supply unit 23 is a power supply device for supplying electric power to a first interdigital electrode unit 71 and the second interdigital electrode unit 72 described later in the micro-channel chip 9. Specifically, the power supply unit 23 is connected to electrode pads 731 to 734 and 741 to 744 described later, and applies an alternating voltage between the electrode pads 731 and 741, between the electrode pads 732 and 742, between the electrode pads 733 and 743, and between the electrode pads 734 and 744.

The sample solution collection unit 24 includes a collection tube 241 and a waste chamber 242. The collection tube 241 has one end connected so as to communicate with a sample solution discharge port 82 of the micro-channel chip 9, and the collection tube 241 has the other end connected to the waste chamber 242. Thus, a sample solution flowing into the micro-channel chip 9 from the sample solution supply port 81 passes through the channel 80, is discharged through the sample solution discharge port 82, and then is collected in the waste chamber 242 through the collection tube 241.

The imaging device 3 is a device for observing a particle in the channel 80 of the micro-channel chip 9 placed on the chip placement stage 21. The imaging device 3 includes an imaging unit 31 and a camera moving mechanism 32.

The imaging unit 31 includes an image taking part 311 and an imaging optical system 312. The image taking part 311 is a so-called camera. The image taking part 311 is an image sensor such as a charge coupled device (CCD) or a complementary metal-oxide semiconductor (CMOS), for example. The imaging optical system 312 is an optical microscope module including an objective lens. The optical microscope module is, for example, a phase-contrast microscope or an epi-illumination microscope.

The camera moving mechanism 32 moves the imaging unit 31 horizontally and vertically, thereby to adjust an imaged area and a focus point of the imaging unit 31. The image taking part 311 can take an image of an area including the second interdigital electrode unit 72 of the micro-channel chip 9 by taking an image at a position adjusted by the camera moving mechanism 32.

The control unit 10 is a controller for controlling operations of the respective components of the observation apparatus 1. As conceptually shown in Fig. 1, the control unit 10 of the present embodiment includes a computer including an arithmetic processing unit 101 such as a CPU, a memory 102 such as a RAM, and a storage unit 103 such as a hard disk drive.

The control unit 10 of the present embodiment is formed by installation of an operation control program Pi for the observation apparatus 1 into the computer. In the storage unit 103 of the control unit 10, a computer program P including the operation control program Pi and data D are stored.

The control unit 10 temporarily reads out the computer program P and the data D stored in the storage unit 103 and loads the program and the data into the memory 102. Then, the arithmetic processing unit 101 performs arithmetic processing on the basis of the computer program P and the data D, thereby to control operations of the respective components in the observation apparatus 1. Thus, a trapping process of a particle under inspection in the dielectrophoresis device 2 proceeds, and also a preparation process for imaging and an imaging process of a particle in the imaging device 3 proceed.

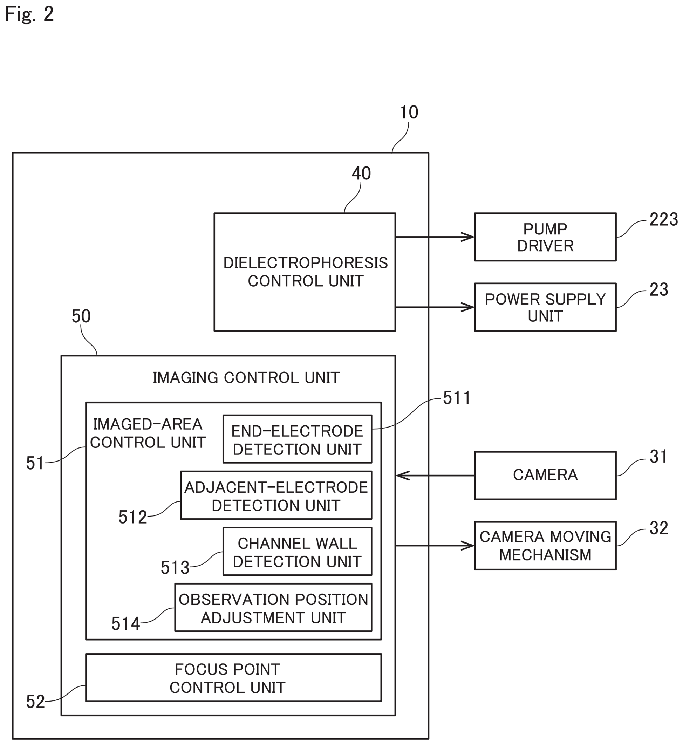

Fig. 2 is a control block diagram of the control unit 10. As shown in Fig. 2, the control unit 10 includes a dielectrophoresis control unit 40 and an imaging control unit 50 as a processing unit implemented on software.

The dielectrophoresis control unit 40 controls operations of the respective components of the dielectrophoresis device 2. The dielectrophoresis control unit 40 controls operations of the pump driver 223 of the sample solution supply unit 22, to control flow of a sample solution into the micro-channel chip 9. Further, the dielectrophoresis control unit 40 controls operations of the power supply unit 23, thereby to trap a particle under inspection in a sample solution, or cancel trapping, over the first interdigital electrode unit 71 and the second interdigital electrode unit 72 in the channel 80 of the micro-channel chip 9.

The imaging control unit 50 includes an imaged-area control unit 51 and a focus point control unit 52. The imaged-area control unit 51 causes the camera moving mechanism 32 to operate, to move a horizontal position of the imaging unit 31, and thus horizontally adjusts an imaged area of the image taking part 311.

More specifically, the imaged-area control unit 51 includes an end-electrode detection unit 511, an adjacent-electrode detection unit 512, a channel wall detection unit 513, and an observation position adjustment unit 514. Detailed description of the end-electrode detection unit 511, the adjacent-electrode detection unit 512, the channel wall detection unit 513, and the observation position adjustment unit 514 will be given later.

The focus point control unit 52 causes the camera moving mechanism 32 to operate, to move a vertical position of the imaging unit 31, and thus adjusts a focus point of the image taking part 311.

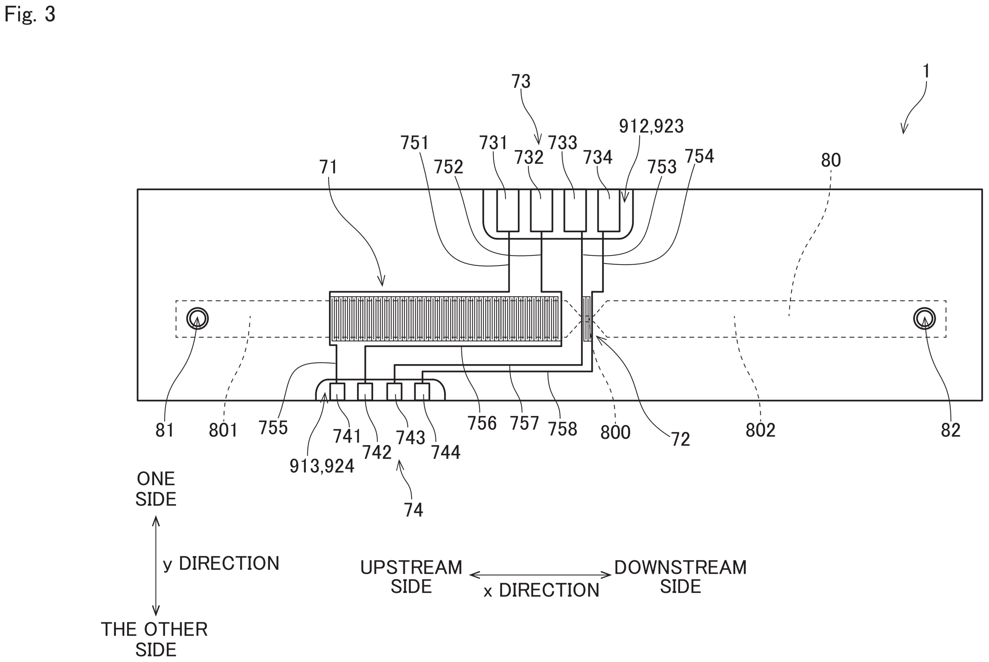

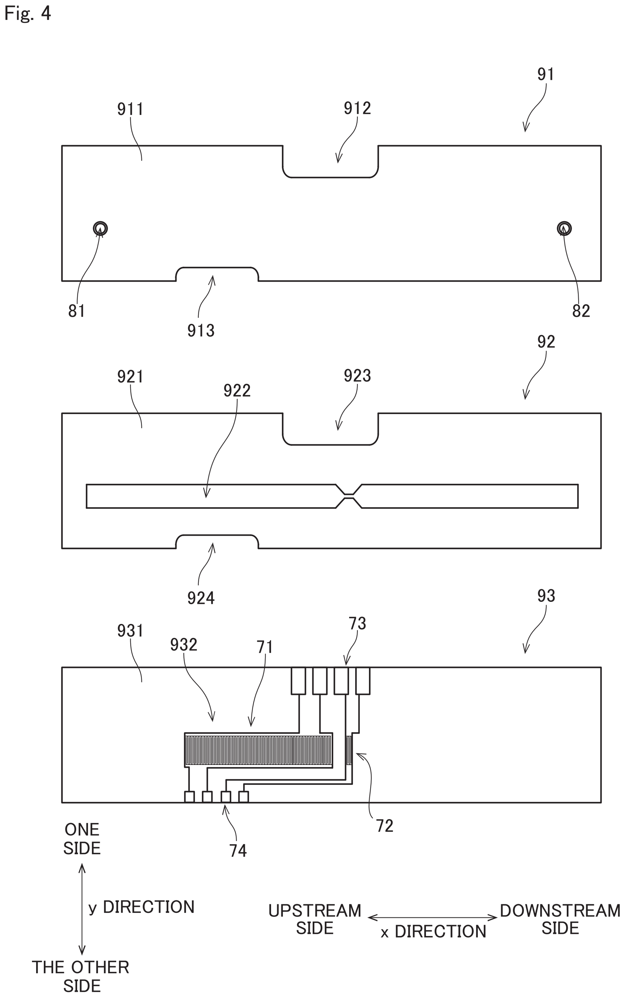

Next, description is given about a configuration of the micro-channel chip 9 with reference to Fig. 1, Fig. 3, and Fig. 4. Fig. 3 is a top view of the micro-channel chip 9. Fig. 4 is a top view of each of layers 91, 92, and 93 of the micro-channel chip 9. Specifically, an upper portion of Fig. 4 is a top view of an upper layer 91, a middle portion is a top view of an intermediate layer 92, and a lower portion is a top view of a lower layer 93.

As conceptually shown in Fig. 1, the micro-channel chip 9 includes three layers of the upper layer 91, the intermediate layer 92, and the lower layer 93 that are arranged sequentially from an upper side to a lower side. The upper layer 91 is made of a transparent material such as acrylic resin, for example. The intermediate layer 92 is made of a transparent material such as an adhesive tape, for example. The lower layer 93 is made of a transparent material such as glass, for example.

As shown in Fig. 3, the micro-channel chip 9 is a plate-shaped member having a rectangular shape in top view. The micro-channel chip 9 includes the channel 80 extending longitudinally in the inside thereof. Further, the micro-channel chip 9 includes the sample solution supply port 81 and the sample solution discharge port 82 each of which has a tube shape and is connected so as to communicate with the channel 80. An upper end of the sample solution supply port 81 protrudes relative to an upper surface of the micro-channel chip 9, and a lower end of the sample solution supply port 81 is connected so as to communicate with the vicinity of one longitudinal end of the channel 80. An upper end of the sample solution discharge port 82 protrudes relative to the upper surface of the micro-channel chip 9, and a lower end of the sample solution discharge port 82 is connected so as to communicate with the vicinity of the other longitudinal end of the channel 80. When a sample solution flows into the channel 80 through the sample solution supply port 81, the sample solution flows through the channel 80 from one longitudinal side to the other longitudinal side and flows out through the sample solution discharge port 82.

As shown in Fig. 4, the upper layer 91 includes a rectangular plate-shaped upper plate part 911, and the sample solution supply port 81 and the sample solution discharge port 82 each of which has a tube shape and extends upward from an edge of a circular through hole provided in the upper plate part 911. Further, the upper plate part 911 includes a first notch 912 and a second notch 913 each of which is recessed inward relative to a rectangular outer shape. The first notch 912 is recessed relative to a longer side part on one side of the upper plate part 911 toward the other side along the y direction. The first notch 912 is positioned so as to vertically overlap a first electrode pad group 73 described later. Meanwhile, the second notch 913 is recessed relative to a longer side part on the other side of the upper plate part 911 toward the one side along the y direction. The second notch 913 is positioned so as to vertically overlap a second electrode pad group 74 described later.

The intermediate layer 92 includes a rectangular plate-shaped intermediate plate part 921. Further, the intermediate plate part 921 includes a channel through hole 922, a third notch 923, and a fourth notch 924. The channel through hole 922 is vertically drilled through the intermediate plate part 921 and extends longitudinally. An inner space of the channel through hole 922 vertically sandwiched between the upper plate part 911 and a lower plate part 931 described later forms the channel 80. The third notch 923 is recessed relative to a longer side part on one side of the intermediate layer 92 toward the other side along the y direction. The third notch 923 is positioned so as to vertically overlap the first electrode pad group 73. Meanwhile, the fourth notch 924 is recessed relative to a longer side part on the other side toward the one side along the y direction. The fourth notch 924 is positioned so as to vertically overlap the second electrode pad group 74.

As shown in Fig. 3 and Fig. 4, the channel 80 has a constant y-direction width for the most part, but includes a narrow channel 800 having a reduced y-direction width in the vicinity of an x-direction center thereof. Note that, in the channel 80, a part upstream of the narrow channel 800 is referred to as a first channel 801, and a part downstream of the narrow channel 800 is referred to as a second channel 802.

The lower layer 93 includes the lower plate part 931 and an electrode layer 932. The lower plate part 931 is a rectangular plate-shaped glass substrate. The electrode layer 932 is a metal layer provided along an upper surface of the lower plate part 931.

The electrode layer 932 includes the first interdigital electrode unit 71, the second interdigital electrode unit 72, the first electrode pad group 73, the second electrode pad group 74, and a plurality of wires 751 to 758.

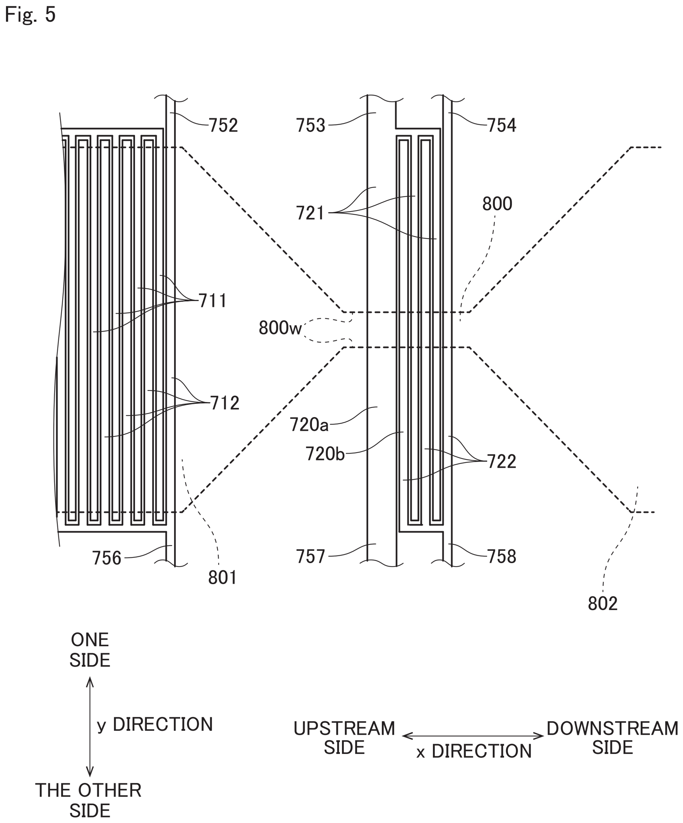

Fig. 5 is a top view of a part of the electrode layer 932 in the vicinity of the first interdigital electrode unit 71 and the second interdigital electrode unit 72. As shown in Fig. 5, the first interdigital electrode unit 71 is an interdigital electrode device in which a plurality of long slender electrodes 711 having one y-direction ends electrically connected to each other and a plurality of long slender electrodes 712 having the other y-direction ends electrically connected to each other are alternately combined. The respective electrodes 711 and 712 of the first interdigital electrode unit 71 extend in a direction crossing the channel 80 and are arranged while being spaced away from each other along a direction in which the channel 80 extends. A y-direction center of each of the electrodes 711 and 712 of the first interdigital electrode unit 71 vertically overlaps the first channel 801 of the channel 80. In other words, the y-direction center of each of the electrodes 711 and 712 of the first interdigital electrode unit 71 is exposed in the first channel 801.

The second interdigital electrode unit 72 is an interdigital electrode device in which a plurality of long slender electrodes 721 having one y-direction ends electrically connected to each other and a plurality of long slender electrodes 722 having the other y-direction ends electrically connected to each other are alternately combined. The respective electrodes 721 and 722 of the second interdigital electrode unit 72 extend in a direction crossing the channel 80 and are arranged while being spaced away from each other along a direction in which the channel 80 extends. A y-direction center of each of the electrodes 721 and 722 of the second interdigital electrode unit 72 vertically overlaps the narrow channel 800 of the channel 80. In other words, the y-direction center of each of the electrodes 721 and 722 of the second interdigital electrode unit 72 is exposed in the narrow channel 800. Further, as shown in Fig. 5, an inner surface of the channel through hole 922 in the intermediate plate part 921 forms a channel wall 800w of the narrow channel 800.

The respective electrodes 711 and 712 of the first interdigital electrode unit 71 and the respective electrodes 721 and 722 of the second interdigital electrode unit 72 have each an x-direction width of, for example, 95 µm. The respective electrodes 711 and 712 of the first interdigital electrode unit 71 and the respective electrodes 721 and 722 of the second interdigital electrode unit 72 have each a z-direction thickness of, for example, 0.5 µm. Further, an x-direction interval between the electrodes 711 and 722 adjacent to each other in the first interdigital electrode unit 71 and an x-direction interval between the electrodes 721 and 722 adjacent to each other in the second interdigital electrode unit 72 are each, for example, 15 µm. The number of the electrodes 721 and 722 of the second interdigital electrode unit 72 is smaller than the number of the electrodes 711 and 712 of the first interdigital electrode unit 71.

The first electrode pad group 73 includes four electrode pads 731, 732, 733, and 734. The first electrode pad group 73 vertically overlaps the first notch 912 and the third notch 923. That is, the first electrode pad group 73 is not covered with the upper layer 91 and the intermediate layer 92, but exposed. Each of the electrode pads 731, 732, 733, and 734 of the first electrode pad group 73 is connected to the power supply unit 23.

The second electrode pad group 74 includes four electrode pads 741, 742, 743, and 744. The second electrode pad group 74 vertically overlaps the second notch 913 and the fourth notch 924. That is, the second electrode pad group 74 is not covered with the upper layer 91 and the intermediate layer 92, but exposed. Each of the electrode pads 741, 742, 743, and 744 of the second electrode pad group 74 is connected to the power supply unit 23.

One of the electrodes 711 of the first interdigital electrode unit 71 has one y-direction end connected to the electrode pad 731 via the wire 751, and has the other y-direction end connected to the electrode pad 741 via the wire 755. One of the electrodes 712 of the first interdigital electrode unit 71 has one y-direction end connected to the electrode pad 732 via the wire 752, and has the other y-direction end connected to the electrode pad 742 via the wire 756.

One of the electrodes 721 of the second interdigital electrode unit 72 has one y-direction end connected to the electrode pad 733 via the wire 753, and has the other y-direction end connected to the electrode pad 743 via the wire 757. One of the electrodes 722 of the second interdigital electrode unit 72 has one y-direction end connected to the electrode pad 734 via the wire 754, and has the other y-direction end connected to the electrode pad 744 via the wire 758.

To trap a particle under inspection included in a sample solution in the first interdigital electrode unit 71, the control unit 10 applies alternating-current power depending on a kind of the particle under inspection, between the electrode pads 731 and 741 and between the electrode pads 732 and 742, from the power supply unit 23. The alternating-current power depending on the kind of the particle under inspection is, for example, a voltage of a frequency at which an electric field that causes dielectrophoretic force (attractive force) to act specifically on the dielectric particle under inspection is generated, and of a magnitude that is not so great as to destroy the dielectric particle.

Specifically, the frequency of the alternating voltage is set such that positive dielectrophoretic force (attractive force) acts on the dielectric particle under inspection because of an electric field generated between the electrode 711 and the electrode 712. Thus, when positive dielectrophoretic force acts on the dielectric particle under inspection, the dielectric particle is trapped between the electrodes 711 and 712. Meanwhile, the frequency of the alternating voltage is set such that dielectrophoretic force does not act on, or scarcely acts on, a particle not under inspection included in the sample solution.

To trap a particle under inspection included in a sample solution in the second interdigital electrode unit 72, the control unit 10 applies alternating-current power depending on a kind of the particle under inspection between the electrode pads 733 and 743 and between the electrode pads 734 and 744, from the power supply unit 23. The alternating-current power depending on the kind of the particle under inspection is, for example, a voltage of a frequency at which an electric field that causes dielectrophoretic force (attractive force) to act specifically on the dielectric particle under inspection is generated, and of magnitude that is not so great as to destroy the dielectric particle.

Specifically, the frequency of the alternating voltage is set such that positive dielectrophoretic force (attractive force) acts on the dielectric particle under inspection because of an electric field generated between the electrode 721 and the electrode 722. Thus, when positive dielectrophoretic force acts on the dielectric particle under inspection, the dielectric particle is trapped between the electrodes 721 and 722. Meanwhile, the frequency of the alternating voltage is set such that dielectrophoretic force does not act on, or scarcely acts on, a particle not under inspection included in the sample solution.

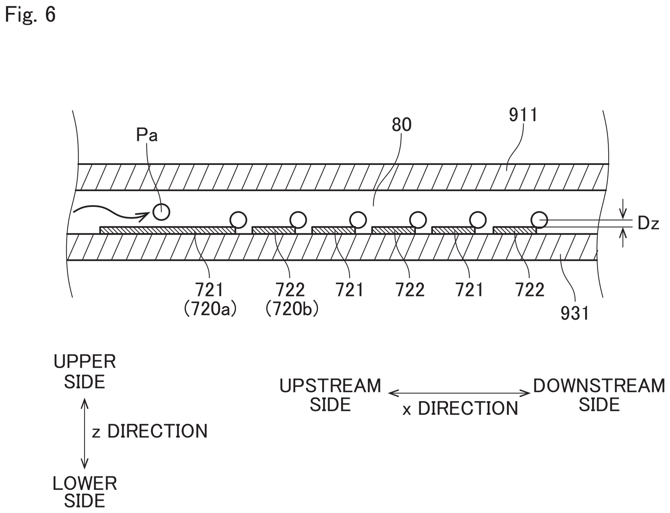

In this regard, Fig. 6 is a partial sectional view of the micro-channel chip 9 in which dielectric particles are trapped in the second interdigital electrode unit. When an electric field is generated between the electrode 721 and the electrode 722 so that positive dielectrophoretic force acts on dielectric particles under inspection, the dielectric particles Pa under inspection adhere to edges of the electrodes 721 and the electrodes 722, as shown in Fig. 6.

### <2. Procedure for Observation>

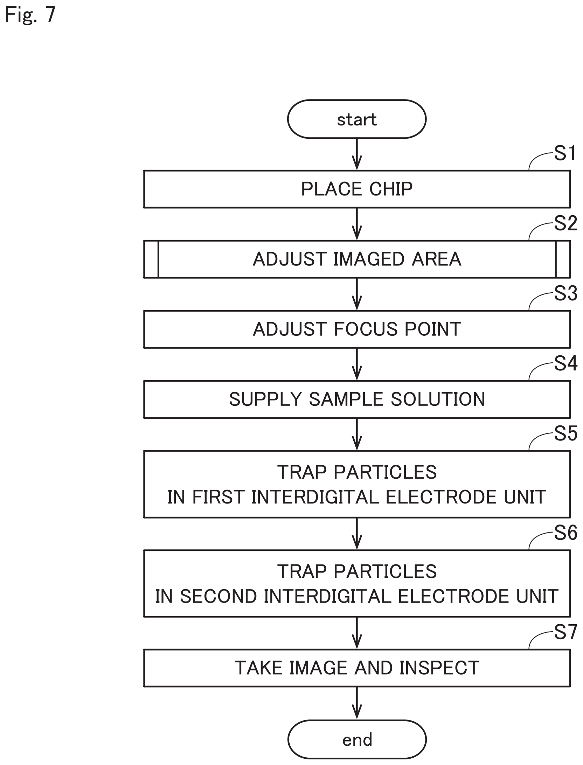

Next, description is given about a procedure for an observation process of particles under inspection in a sample solution in the observation apparatus 1. Fig. 7 is a flowchart showing a process flow of the observation process of particles under inspection.

As shown in Fig. 7, first, a user places the micro-channel chip 9 on the chip placement stand 21 (step S1).

Subsequently, the imaged-area control unit 51 moves a horizontal position of the imaging unit 31 using the camera moving mechanism 32 and adjusts an imaged area of the image taking part 311 to a predetermined position (step S2: imaged-area adjustment step). Details of the imaged-area adjustment step S2 are given later.

Then, the focus point control unit 52 moves a vertical position of the imaging unit 31 using the camera moving mechanism 32 and adjusts a focus point of the image taking part 311 to a predetermined position (step S3: focus point adjustment step). Specifically, the focus point control unit 52 sets the focus point of the image taking part 311 on the surfaces of the electrodes 721 and 722, and then moves the focus point to a position shifted upward in the z direction by a predetermined distance Dz. Note that, as shown in Fig. 6, the predetermined distance Dz is determined taking into account the position where the dielectric particles Pa under inspection adhere.

After that, the dielectrophoresis control unit 40 controls operations of the pump driver 223 of the sample solution supply unit 22, to start supply of a sample solution into the micro-channel chip 9 (step S4: sample solution supply step).

At the same time with, or before and after, the start of supply of the sample solution, the dielectrophoresis control unit 40 supplies electric power between the electrode pads 731 and 741 and between the electrode pads 732 and 742, from the power supply unit 23, to generate an electric field between the electrodes 711 and 712 of the first interdigital electrode unit 71. As a result of this, the particles under inspection included in the sample solution flowing through the first channel 801 are trapped between the electrodes 711 and 712 of the first interdigital electrode unit 71 (step S5: first particle trapping step).

Subsequently, the dielectrophoresis control unit 40 supplies electric power between the electrode pads 733 and 743 and between the electrode pads 734 and 744, from the power supply unit 23, to generate an electric field between the electrodes 721 and 722 of the second interdigital electrode unit 72. As a result of this, the particles under inspection included in the sample solution flowing through the narrow channel 800 can be trapped between the electrodes 721 and 722 of the second interdigital electrode unit 72. After the electric field is generated in the second interdigital electrode unit 72, the dielectrophoresis control unit 40 stops supply of electric power between the electrode pads 731 and 741 and between the electrode pads 732 and 742 from the power supply unit 23. This results in cancellation of trapping of the particles under inspection in the first interdigital electrode unit 71. The particles under inspection released from the first interdigital electrode unit 71 flow through the channel 80 and are trapped between the electrodes 721 and 722 of the second interdigital electrode unit 72 (step S6: second particle trapping step).

In this regard, the number and the area of the electrodes 711 and 712 exposed in the first channel 801 in the first interdigital electrode unit 71 are larger than the number and the area of the electrodes 721 and 722 exposed in the narrow channel 800 in the second interdigital electrode unit 72. For this reason, in the step S5, the particles under inspection in the sample solution flowing through the first channel 801 can be efficiently trapped in the first interdigital electrode unit 71. Then, the particles under inspection trapped in the first interdigital electrode unit 71 are gathered at the y-direction center on the way to the narrow channel 800 from the first channel 801. Thus, when the particles under inspection are trapped in the second interdigital electrode unit 72 in the step S6, the particles are trapped at a higher density than that in the first interdigital electrode unit 71. Therefore, the particles under inspection can be observed more reliably when an image of the particles under inspection is taken by the imaging unit 31.

Then, the imaging unit 31 takes an image of the particles trapped in the second interdigital electrode unit 72 in a predetermined imaged area. Thus, the user can conduct inspection using the taken image as acquired (step S7: image taking and inspection step).

### <3. Imaged-Area Adjustment Step>

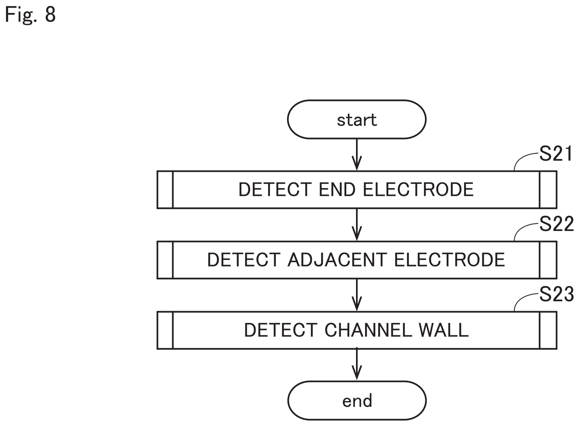

Next, with reference to Fig. 8, a specific process flow of the imaged-area adjustment step of the step S2 is described. Fig. 8 is a flowchart showing the process flow of the imaged-area adjustment step.

As shown in Fig. 8, in the imaged-area adjustment step, first, the end-electrode detection unit 511 moves the imaging unit 31 using the camera moving mechanism 32 and detects an end electrode 720a that is an electrode positioned at an upstream end of the channel 80, on the basis of a taken image of the imaging unit 31 (step S21: end-electrode detection step). In other words, the end-electrode detection unit 511 moves the imaging unit 31 using the camera moving mechanism 32 such that an imaged area A of the imaging unit 31 includes the end electrode 720a.

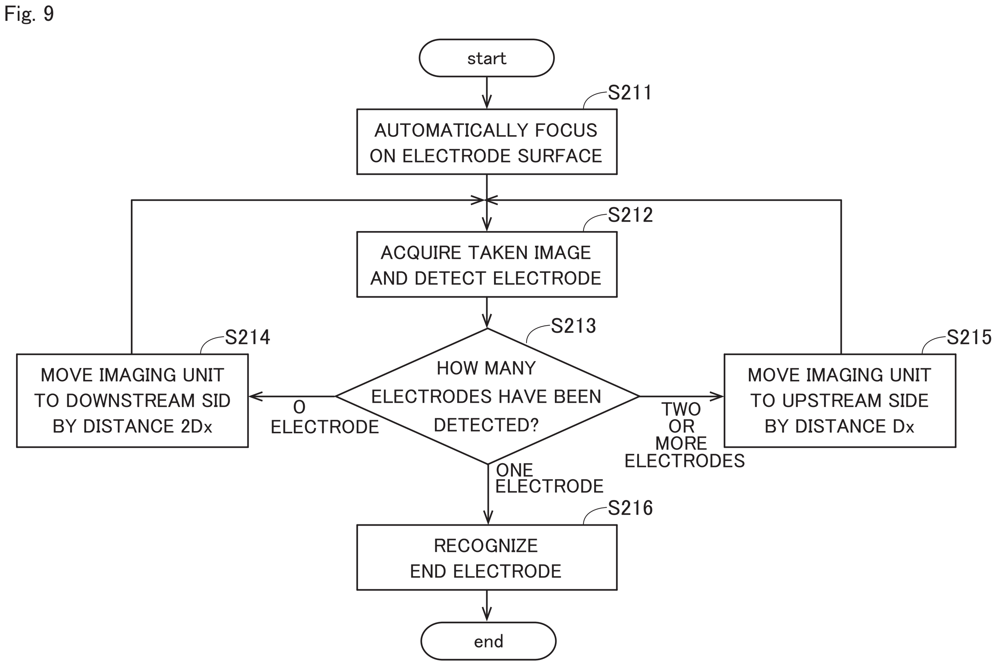

The end-electrode detection step of the step S21 is described with reference to Fig. 9. Fig. 9 is a flowchart showing a process flow of the end-electrode detection step. In the present embodiment, as shown in Fig. 5, the end electrode 720a has an x-direction width larger than those of the other electrodes 721 and 722. With the use of this configuration, the end electrode 720a is detected by reference to how many electrodes 721 and 722 are included in the imaged area A.

As shown in Fig. 9, in the end-electrode detection step, first, the end-electrode detection unit 511 moves the imaging unit 31 using the camera moving mechanism 32 such that a focus point is set on the surfaces of the electrodes 721 and 722 while the imaging unit 31 is at its initial position (step S211). Note that the initial position of the imaging unit 31 is set to be near an x-direction upstream end of the second interdigital electrode unit 72. However, the initial position is deviated during placement of the micro-channel chip 9, which necessitates the end-electrode detection step.

Subsequently, the end-electrode detection unit 511 causes the imaging unit 31 to acquire a taken image and detects the electrodes 721 and 722 in the taken image (step S212). Specifically, the end-electrode detection unit 511 detects a place in which an area having a luminance value lower than a predetermined threshold value continues in the x direction in the taken image, as the electrodes 721 and 722.

Then, the end-electrode detection unit 511 determines how many electrodes 721 and 722 have been detected in the step S212 (step S213).

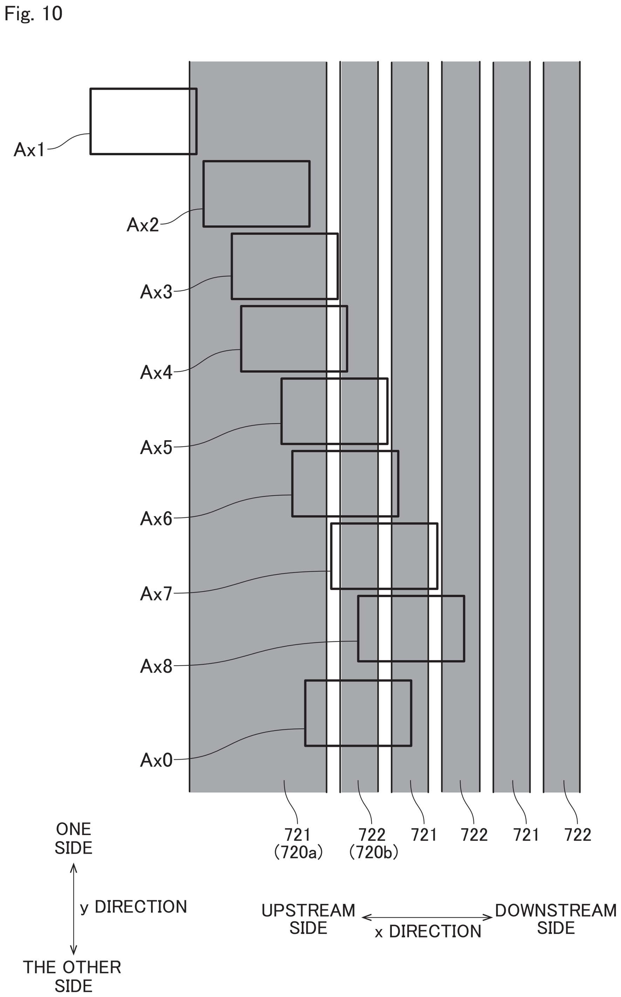

In this regard, Fig. 10 is a view showing examples of an x-direction position of the imaged area A. Fig. 10 shows a positional relationship along the x direction between the imaged area A and the electrodes 721 and 722 of the second interdigital electrode unit 72 in a case in which the imaged area A is moved from an area example Ax1 at the most upstream position where the imaged area A includes the second interdigital electrode unit 72, to a downstream side, sequentially in the order of area examples Ax2, Ax3, Ax4, and the like. Note that the area examples Ax1 to Ax8 and Ax0 shown in Fig. 10 are rectangles having longer sides along the x direction, but actually, the imaged area A may have a shape of a square or a rectangle having longer sides along the y direction.

In each of the area examples Ax1, Ax2, and Ax3 in Fig. 10, only the end electrode 720a corresponds to the electrodes 721 and 722 included in the imaged area A. In the area example Ax1, the imaged area A includes an upstream end of the end electrode 720a. In the area example Ax2, the imaged area A entirely overlaps the end electrode 720a. In the area example Ax3, the imaged area A includes a downstream end of the end electrode 720a, but does not include an adjacent electrode 720b adjacent to the end electrode 720a.

In the example in Fig. 10, when the imaged area A is moved downstream of the area example Ax3, in each of the area examples Ax4 and Ax5, the imaged area A includes two electrodes of the end electrodes 720a and the adjacent electrode 720b. Then, when the imaged area A is moved further downstream, in an area example Ax6, the imaged area A includes three electrodes additionally including an electrode adjacent to the adjacent electrode 720b. After that, on the side downstream of the area example Ax4, the number of electrodes 721 and 722 included in the imaged area A is two or three such as two electrodes in the area example Ax7 and three electrodes in the area example Ax8. This relationship is used to detect the end electrode 720a in the end-electrode detection step in the present embodiment shown in Fig. 9.

When it is determined that the number of the detected electrodes 721 and 722 is zero in the step S213, the end-electrode detection unit 511 moves the imaging unit 31 to a downstream side in the x direction by a distance 2Dx using the camera moving mechanism 32 (step S214). In other words, the imaged area A is moved to the downstream side in the x direction by the distance 2Dx. Then, the process returns back to the step S212.

When it is determined that the number of the detected electrodes 721 and 722 is two or more in the step S213, the end-electrode detection unit 511 moves the imaging unit 31 to an upstream side in the x direction by the distance Dx using the camera moving mechanism 32 (step S215). In other words, the imaged area A is moved to the upstream side in the x direction by the distance Dx. Then, the process returns back to the step S212.

When it is determined that the number of the detected electrodes 721 and 722 is one in the step S213, the end-electrode detection unit 511 recognizes that the end electrode 720a corresponds to the electrodes 721 and 722 currently included in the imaged area A (step S216).

Note that the length of the distance Dx is set on the basis of the x-direction width of the electrodes 721 and 722 except the end electrode 720a, and the x-direction interval between the electrodes 721 and 722 adjacent to each other. In the present embodiment, the x-direction width of the electrodes 721 and 722 except the electrode 720a is 95 µm, the x-direction interval between the electrodes 721 and 722 adjacent to each other is 15 µm, and Dx is a sum of those dimensions, i.e., 110 µm. A setting method for the distance Dx is not limited to that, and the distance Dx may be set on the basis of the x-direction length of the imaged area A.

The description refers back to Fig. 8. After the end-electrode detection unit 511 detects the end electrode 720a in the end-electrode detection step of the step S21 in the above-described manner, subsequently, the adjacent-electrode detection unit 512 detects the adjacent electrode 720b adjacent to the end electrode 720a detected in the end-electrode detection step on the basis of the taken image of the imaging unit 31 (step S22).

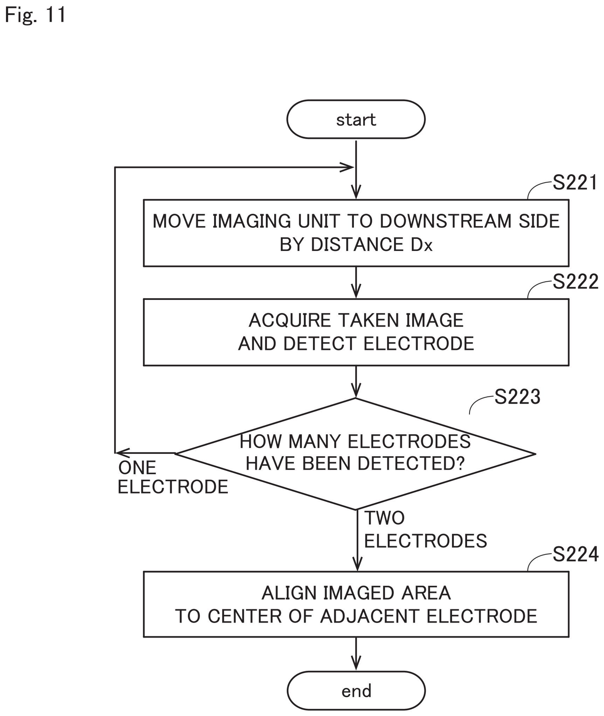

The adjacent-electrode detection step of the step S22 is described with reference to Fig. 11. Fig. 11 is a flowchart showing a process flow of the adjacent-electrode detection step. As shown in Fig. 11, in the adjacent-electrode detection step, first, the adjacent-electrode detection unit 512 moves the imaging unit 31 to the downstream side in the x direction by the distance Dx from the time of end of the end-electrode detection step, using the camera moving mechanism 32 (step S221). As a result, the imaged area A includes at least a part of the end electrode 720a and at least a part of the adjacent electrode 720b.

Then, the adjacent-electrode detection unit 512 causes the imaging unit 31 to acquire a taken image and detects the electrodes 721 and 722 in the taken image (step S222). After that, the adjacent-electrode detection unit 512 determines how many electrodes 721 and 722 have been detected in the step S222 (step S223).

When it is determined that the number of the detected electrodes 721 and 722 is one in the step S223, in other words, in a case in which only the end electrode 720a is detected in the imaged area A, the adjacent-electrode detection unit 512 returns the process back to the step S221.

On the other hand, when it is determined that the number of the detected electrodes 721 and 722 is two in the step S223, in other words, in a case in which the end electrode 720a and the adjacent electrode 720b are detected in the imaged area A, the adjacent-electrode detection unit 512 moves the imaging unit 31 in the x direction using the camera moving mechanism 32 such that the x-direction center of the imaged area A and the x-direction center of the adjacent electrode 720b coincide with each other, on the basis of the positions of the end electrode 720a and the adjacent electrode 720b having been detected (step S223). At that time, the position of the area example Ax0 in Fig. 10 corresponds to the x-direction position of the imaged area A. As a result of this, the imaged area A includes inter-electrode areas adjacent to each other on both sides of the adjacent electrode 720b along the x direction. This position serves as an x-direction reference observation position.

In the meantime, depending on a relationship between the x-direction length of the imaged area A, the x-direction width of the electrodes 721 and 722 except the end electrode 720a, and the x-direction interval between the electrodes 721 and 722 adjacent to each other, there can be an imaging position that allows the imaged area A to include four or more electrodes 721 and 722 in some cases. In such a case, in the step S223, the adjacent-electrode detection unit 512 is only required to set the x-direction reference observation position such that the imaged area A includes the suitable number of inter-electrode areas for observation, on the basis of the positions of the end electrode 720a and the adjacent electrode 720b having been detected.

The description refers back to Fig. 8. After the x-direction reference observation position is determined in the adjacent-electrode detection step of the step S22 in the above-described manner, subsequently, the channel wall detection unit 513 moves the imaging unit 31 by reference to the x-direction positions of the end electrode 720a and the adjacent electrode 720b using the camera moving mechanism 32, and detects the channel wall 800w that is a sidewall of the narrow channel 800 (step S23: channel wall detection step).

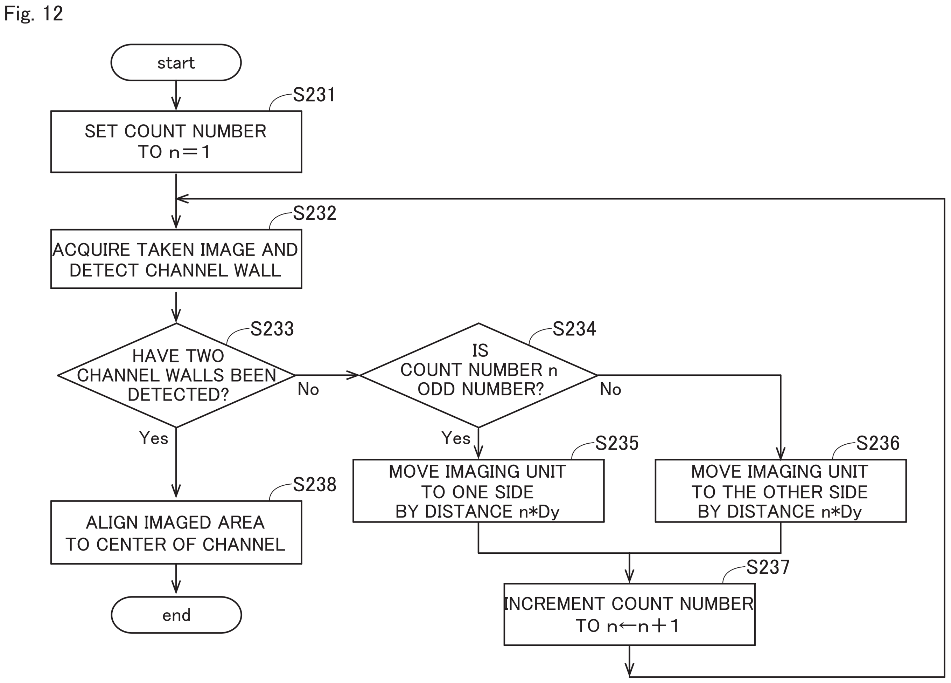

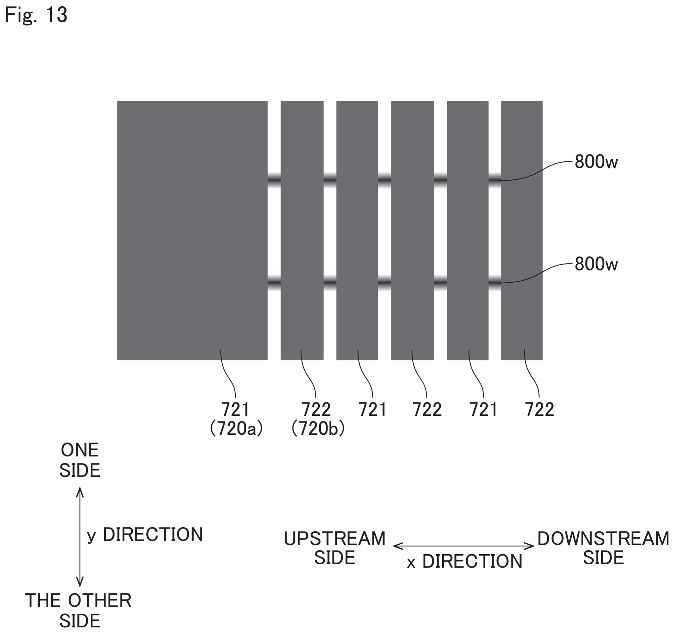

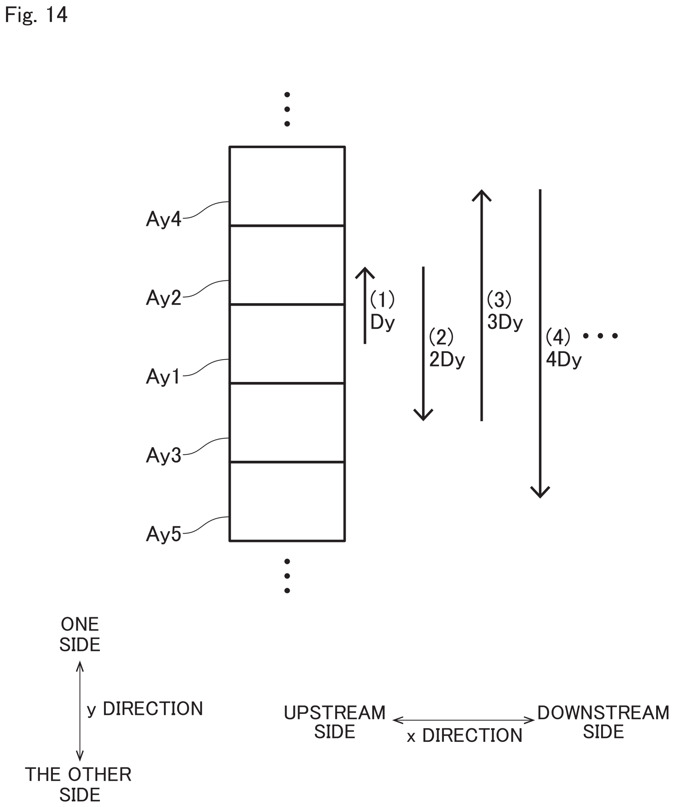

The channel wall detection step of the step S23 is described with reference to Fig. 12 to Fig. 14. Fig. 12 is a flowchart showing a process flow of the channel wall detection step. Fig. 13 is a view diagrammatically showing how the electrodes 721 and 722 and the channel wall 800w appear in a taken image of the imaging unit 31. Fig. 14 is a view showing examples of a y-direction position of the imaged area A.

As shown in Fig. 12, in the channel wall detection step, first, the channel wall detection unit 513 sets a count number n to n = 1 (step S231).

Subsequently, the imaging unit 31 is caused to acquire a taken image at a current position thereof, and the channel wall 800w in the taken image is detected (step S232). In the step S232, when the channel wall 800w is detected, the channel wall detection unit 513 recognizes the position of the channel wall 800w. Note that, as shown in Fig. 13, the channel wall 800w that is an end surface of the intermediate plate part 921 made of a transparent material, appears blackish and blurred in the taken image.

Subsequently, the channel wall detection unit 513 determines whether two channel walls 800w have been detected (step S233). When it is determined that two channel walls 800w have not been detected in the step S233, the channel wall detection unit 513 determines whether the current count number n is an odd number or an even number (step S234).

When it is determined that the count number n is an odd number in the step S234, the channel wall detection unit 513 moves the imaging unit 31 in the y direction using the camera moving mechanism 32, so that the imaged area A is moved to one side in the y direction by a distance n*Dy (step S235). Note that the distance Dy is equal to or smaller than the y-direction length of the imaged area A. In Fig. 14, the distance Dy is equal to the y-direction length of the imaged area A.

On the other hand, when it is determined that the count number n is an even number in the step S234, the channel wall detection unit 513 moves the imaging unit 31 in the y direction using the camera moving mechanism 32, so that the imaged area A is moved to the other side in the y direction by the distance n*Dy (step S236).

After the imaging unit 31 is moved in the step S235 or the step S236, the channel wall detection unit 513 increments the count number n (step S237) and returns the process back to the step S232.

After repetition of a loop including the step S232 to the step S237 without detecting two channel walls 800w, as shown in Fig. 14, in a case in which the imaged area A is located at a position of an area example Ay1 at the beginning of the step S23, the imaged area A is moved to an area example Ay2 at a position shifted to the one side in the y direction by the distance Dy relative to the area example Ay1, in the first loop (the count number n = 1), as indicated by an arrow (1) in Fig. 14. In other words, the imaged area A is moved to a position adjacent to, and on the one side of, the area example Ay1 in the y direction.

Then, in the second loop (the count number n = 2), the imaged area A is moved to an area example Ay3 at a position shifted to the other side in the y direction by a distance 2*Dy relative to the area example Ay2, as indicated by an arrow (2) in Fig. 14. In other words, the imaged area A is moved to a position that is shifted to the other side in the y direction by the distance Dy relative to the area example Ay1 and is adjacent to, and on the other side of, the area example Ay1 in the y direction.

Subsequently, in the third loop (the count number n = 3), the imaged area A is moved to an area example Ay4 at a position shifted to the one side in the y direction by a distance 3*Dy relative to the area example Ay3 as indicated by an arrow (3) in Fig. 14. In other words, the imaged area A is moved to a position shifted to the one side in the y direction by the distance 2*Dy relative to the area example Ay1.

Further, in the fourth loop (the count number n = 4), the imaged area A is moved to an area example Ay5 at a position shifted to the other side in the y direction by a distance 4*Dy relative to the area example Ay4 as indicated by an arrow (4) in Fig. 14. In other words, the imaged area A is moved to a position shifted to the other side in the y direction by the distance 2*Dy relative to the area example Ay1.

During repetition of the loop including the step S232 to the step S237 in the above-described manner, the imaged area A is moved from the area example Ay1, as a starting point, to a position shifted to one side by the distance Dy, to a position shifted to the other side by the distance Dy, to a position shifted to the one side by the distance 2*Dy, to a position shifted to the other side by the distance 2*Dy, to a position shifted to the one side by the distance 3*Dy, to a position shifted to the other side by the distance 3*Dy, and the like. That is, from the area example Ay1 as a starting point, a search range for the channel wall 800w extends in the both y directions alternately.

Then, in a loop after several-time loops, when it is determined that two channel walls 800w have been detected in the step S233, the channel wall detection unit 513 moves the imaging unit 31 in the y direction using the camera moving mechanism 32 such that the y-direction center of the imaged area A and the y-direction center of the narrow channel 800 coincide with each other, on the basis of the positions of the two channel walls 800w having been recognized (step S238).

By the above-described process, the imaged-area adjustment step (step S2) shown in Fig. 8 is completed. As described above, the imaging unit 31 is moved using the camera moving mechanism 32 on the basis of the x-direction positions of the end electrode 720a and the adjacent electrode 720b having been detected and the y-direction positions of the channel walls 800w on both sides of the channel 80 in the steps S21 to S23, so that the observed area A where the particles Pa under inspection are observed is adjusted.

Adjusting a position of the imaged area A by the above-described procedure enables proper alignment in observation of particles trapped in the vicinity of the electrodes.

### <4. Modifications>

Hereinabove, one embodiment of the present invention has been described, but the present invention is not limited to the above-described embodiment.

In each of the drawings of the above-described embodiment, the shapes of the channels and the electrode units are just examples and are appropriately alterable without changing roles thereof.

Further, in the above-described embodiment, each of the electrodes 711, 712, 721, and 722 of the two interdigital electrode units 71 and 72 is perpendicular to the direction in which the channel 80 extends, but the present invention is not limited to that. Each of the electrodes 711, 712, 721, and 722 of the two interdigital electrode units 71 and 72 is only required to cross the direction in which the channel 80 extends, and may be positioned obliquely to the direction in which the channel 80 extends.

Moreover, in the above-described embodiment, in the imaged-area adjustment step of the step S2, the electrode positioned at the x-direction upstream end in the second interdigital electrode unit 72 has an x-direction width different from those of the other electrodes 721 and 722, and thus the electrode positioned at the upstream end is detected as the end electrode 720a, but the present invention is not limited to that. An electrode positioned at the x-direction downstream end may have a width different from those of the other electrodes 721 and 722, and the electrode positioned at the downstream end may be detected as the end electrode, to be used as a reference for the x direction.

Furthermore, the respective elements described in the above-described embodiment and modifications may be appropriately combined unless contradiction occurs.

While the invention has been shown and described in detail, the foregoing description is in all aspects illustrative and not restrictive. It is therefore understood that numerous modifications and variations can be devised without departing from the scope of the invention.

## Claims

1. An observation apparatus (1) that observes a particle trapped by a plurality of electrodes (72) extending in a direction crossing a channel (80) formed in a transparent substrate (9), comprising:
a camera (311) configured to take an image of an area including the electrodes (72) in the substrate (9);
a camera moving mechanism (32) configured to move an imaged area of the camera (311); and
a control unit (10) configured to control the camera (311) and the camera moving mechanism (32), wherein
the control unit (10) includes, as a processing unit implemented on software, the following components;
an end-electrode detection unit (511) configured to move the camera (311) using the camera moving mechanism (32) and detect an end electrode (720a) that is one of the electrodes (72) that is positioned at an upstream or downstream end of the channel (80), on the basis of a taken image of the camera (311);
an adjacent-electrode detection unit (512) configured to move the camera (311) using the camera moving mechanism (32) and detect an adjacent electrode (720b) that is adjacent to the end electrode (720a) detected by the end-electrode detection unit (511), on the basis of the taken image of the camera (311);
a channel wall detection unit (513) configured to move the camera (311) using the camera moving mechanism (32) and detect a sidewall (800w) of the channel (80) by reference to positions of the end electrode (720a) and the adjacent electrode (720b); and
an observation position adjustment unit (514) configured to move the camera (311) using the camera moving mechanism (32) and adjust an observation position where the particle is observed, on the basis of the positions of the end electrode (720a), the adjacent electrode (720b), and the sidewall (800w).

2. The observation apparatus (1) according to claim 1, wherein the end electrode (720a) of the plurality of electrodes (72) included in the substrate (9) has a width different from those of the other electrodes (72).

3. The observation apparatus (1) according to claim 1, wherein
the control unit (10) further includes, as the processing unit implemented on the software, a focus point control unit (52) configured to adjust a focus of the camera (311) by reference to surfaces of the electrodes (72) after the camera (311) has been aligned to the observation position using the observation position adjustment unit.

4. An observation method for observing a particle trapped by a plurality of electrodes (72) extending in a direction crossing a channel (80) formed in a transparent substrate (9), comprising the steps of:
a) moving a camera (311) configured to take an image of an area including the electrodes (72) in the substrate (9) and detecting an end electrode (720a) that is one of the electrodes (72) that is positioned at an upstream or downstream end of the channel (80), on the basis of a taken image of the camera (311);
b) moving the camera (311) and detecting an adjacent electrode (720b) that is adjacent to the end electrode (720a) detected in the step a);
c) moving the camera (311) and detecting a sidewall (800w) of the channel (80) by reference to positions of the end electrode (720a) and the adjacent electrode (720b); and
d) moving the camera (311) and adjusting an observation position where the particle is observed, on the basis of the positions of the end electrode (720a), the adjacent electrode (720b), and the sidewall (800w).
